# EUROPEAN PATENT SPECIFICATION

(11) **EP 0 586 389 B1**
(45) Date of publication and mention of the grant of the patent: **05.11.1997**
(21) Application number: 92907469.8
(22) Date of filing: 23.03.1992
(51) Int. Cl.: C08F 10/00, C08F 4/651, C08F 4/654

(54) **A LARGE-PORE POLYOLEFIN, A METHOD FOR ITS PRODUCTION AND A PROCATALYST CONTAINING A TRANSESTERIFICATION PRODUCT OF A LOWER ALCOHOL AND A PHTHALIC ACID ESTER**
GROSS-PORIGES POLYOLEFIN, VERFAHREN ZU SEINER HERSTELLUNG UND PROKATALYSATOR BASIEREND AUF DEM PRODUKT EINES UMESTERUNG AUS EINEM NIEDRIGEM ALKOHOL UND EINEM PHTHALSÄUREESTER
POLYOLEFINE A PORES LARGES, PROCEDE DE PRODUCTION DE CETTE POLYOLEFINE ET PROCATALYSEUR CONTENANT UN PRODUIT DE TRANSESTERIFICATION ENTRE UN ALCOOL INFERIEUR ET UN ESTER D'ACIDE PHTALIQUE

(30) Priority: 09.05.1991 FI 912264
(43) Date of publication of application: 16.03.1994
(73) Proprietor: BOREALIS A/S, 2800 Lyngby (DK)
(72) Inventor: GAROFF, Thomas, SF-00840 Helsinki (FI); LEINONEN, Timo, SF-06750 Tolkkinen (FI); LISKOLA, Eero, SF-06100 Porvoo (FI)
(74) Representative: Dost, Wolfgang, Dr.rer.nat., Dipl.-Chem.
(86) International application number: FI9200083
(87) International publication number: WO9219659

(56) References cited:
- EP-A- 226 003
- EP-A- 488 537
- WO-A-87/07620

## Description

The invention relates to a method for preparing polyolefins by polymerizing olefin with a procatalyst composition prepared by bringing together MgCl₂, a C₁-C₄ alcohol, a titanium compound, and a phthalic acid ester. The invention also relates to a polyolefin obtained by polymerizing olefin in the presence of a procatalyst prepared by bringing together MgCl₂, a C₁-C₄ alcohol, a titanium compound and a phthalic acid ester, as well as to a procatalyst composition suitable for the preparation of a polyolefin, which composition has been prepared by bringing together MgCl₂, a C₁-C₄ alcohol, a titanium compound, and a phthalic acid ester.

Olefins, in particular α-olefins, are often polymerized using a catalyst composition in which the procatalyst is made up of a compound of a transition metal of groups IV-VI of the periodic table and a compound of a metal of groups I-III of the periodic table which activates it by reduction, i.e. a cocatalyst. The so-called Ziegler-Natta procatalyst has been developed further by using as the support for the transition-metal compound an inert carrier onto which the transition-metal compound is deposited, the purpose being thus to improve the activity of the procatalyst in catalyzing the polymerization reaction.

However, under the action of this procatalyst composition, asymmetric olefin monomers often polymerize into different stereoisomeric polymers and, for example, mixtures of an isotactic, an atactic, and a syndiotactic polymer are obtained, from which the desired stereoisomer must be separated by a wash and other such steps, which are often cumbersome. When it has been desired to prepare a polymer which is in the main of a certain stereospecific form, for example an isotactic polyolefin, from an asymmetric olefin monomer, the effect of the catalyst on the stereospecificity of the product obtained has been improved by adding a donor compound to the catalyst.

Owing to its steric structure of a certain type, the donor compound contributes to the settling of the monomer molecule in a certain position in the catalyst particle at the end of the growing polymer molecule, and thus the molecule chain of the polymer obtains a certain stereoisomeric structure and the polymer product obtained is more or less of the desired type, depending on the donor compound selected.

There are two possible ways of adding a donor to the catalyst: a so-called internal donor is added already to the procatalyst mixture of the transition-metal compound and the carrier, or the donor is added to the mixture of the monomer and the catalyst component as late as in the polymer reactor at the time that the cocatalyst is added, in which case the donor is called an external donor. Of course, it is also possible to use a donor compound in both steps, in which case the donor may be the same or a different compound in the different steps.

All monomers are asymmetric, i.e. stereospecifically polymerizable monomers, except ethylene, in which all side groups of the unsaturated carbon atom are hydrogens, and the rare case in which all side groups are the same, for example, tetramethylethylene. A certain stereospecific form is made desirable by the fact that the properties of the obtained polymer are most advantageous for a certain purpose; for example, isotactic polyolefins crystallize better, their bulk density is higher, their mechanical properties are better, i.e. they are, for example, stronger, etc. The adhesion properties of the atactic form are usually better than those of other tactic forms, and they are therefore suitable for adhesive applications.

In the polymerization of asymmetric olefin monomers, i.e. when the groups linked to carbon atoms linked by an unsaturated bond are different at least with respect to one group, the catalyst may contain a compound which improves the stereospecificity of the catalyst, i.e. it may contain an electron donor which, readily yielding an electron, may link to the rest of the catalyst structure and, owing to its steric action, direct the monomer molecule being linked to the polymer chain into such a position that the forming polymer molecule will have a structure which is stereospecific in a certain way. Such donors include a large number of different organic compounds, e.g. esters, carboxylic acids, alcohols, ketones, aldehydes, nitriles, amides, amines, organic compounds of phosphorus and silicon, etc. These compounds also have other effects on the properties of the catalyst; for example, the activity of the catalyst varies depending on the donor used. If the donor used is a carboxylic acid ester, common choices are aromatic carboxylic acid esters, e.g. benzoates, phthalates, toluates, anisates, etc. The most advantageous donors among these are dialkyl phthalates.

Owing to the so-called replica phenomenon, the physical structure of the procatalyst carrier is repeated in the entire procatalyst composition, and ultimately also in the polymer product, and therefore the morphology of the procatalyst composition is very important in terms of polymerization.

In the art there are also known combinations of different donors. Thus, for example, a procatalyst composition which is prepared of MgCl₂, 2-ethylhexyl alcohol, titanium tetrachloride, di-isobutyl phthalate, and in some cases a phthalic acid anhydride, is known from JP publications 59172507, 59206409, 59206415, 59206416, 59206424, 60262804, 61103910, and 61108614.

The patent family which includes publications DE-3 540 699, EP-226 003, and US-4 761 461 discloses a method for the preparation of propylene polymers by means of a procatalyst composition obtained by bringing together, under predetermined conditions at 90°C, MgCl₂, an alkanol such as ethanol, a phthalic acid ester such as di-isobutyl phthalate, and titanium tetrachloride. The phthalic acid ester can be added either in the step in which MgCl₂ and ROH react with each other or in the step in which the reaction product of MgCl₂ and alkanol are caused to react with titanium tetrachloride. As a result, dibutylphthalate is attached to the MgCl₂ catalyst carrier.

By the use of the above-mentioned procatalyst compositions and polymerization methods, small-pore polyolefins are obtained with which additives, such as antioxidants, do not mix readily or permanently.

It is an object of the invention to provide an active and stereospecific procatalyst composition. It is also an object of the invention to lower the titanium and donor contents of the catalyst, and thereby of the polyolefin, since these impurities respectively cause, for example, color problems and detrimental aromatic properties in the polyolefin. The aim in the present invention is in particular a method and catalyst by means of which the pore size of polyolefin can be increased, and a corresponding large-pore polyolefin.

The objects set for the invention have now been attained by a method for the preparation of polyolefins, which method is mainly characterized in what is stated in the characterizing clause of Claim 1. The invention also relates to a polyolefin, which is characterized in what is stated in the characterizing clause of Claim 11, and to a procatalyst composition suitable for the preparation of polyolefin, which composition is substantially characterized in what is stated in the characterizing clause of Claim 13.

It has thus been discovered that, when a procatalyst composition prepared by bringing together MgCl₂, a C₁-C₄ alcohol, a titanium compound and a phthalic acid ester is used, the pore size of the polyolefin product can be increased by carrying out, in connection with the preparation of the procatalyst, a transesterification between the lower alcohol and the phthalic acid ester and by selecting a phthalic acid ester the alkoxy group of which has at minimum ten carbon atoms.

The MgCl₂ carrier of the procatalyst composition used in the polymerization method according to the invention can be used as such or by combining it with silica, for example by impregnating silica with a solution or slurry which contains MgCl₂. It is also important that the MgCl₂ used is pure and anhydrous.

The alcohol used may be any C₁-C₄ alcohol. Methanol and ethanol, in particular ethanol, are preferred alcohols.

Since under the effect of the so-called replica phenomenon the physical structure of the catalyst carrier is repeated in the entire catalyst composition, and this subsequently in the polymer product obtained, it is very important to render the physical structure, i.e. morphology, of the carrier advantageous, i.e. similar to the product desired. This can be arrived at by two different procedures, which can, of course, also be combined: chemically, i.e. by treating the carrier with a certain chemical or certain chemicals, or physically, i.e. by grinding the carrier in a ball mill or in a jet blower mill.

It is also possible to use a procedure in which first an adduct of the carrier, in this case specifically MgCl₂, and of the lower alcohol, preferably ethanol, is prepared, and this adduct is smelted, the melt is sprayed by means of gas into a cold solvent or a cold gas, whereupon the adduct crystallizes in a morphologically advantageous form, and this crystalline adduct is used as the catalyst carrier (cf. FI-862459).

The titanium compound used in the preparation of the procatalyst composition of the method according to the invention is preferably an organic or inorganic titanium compound which is at an oxidation degree of 3 or 4. When necessary, even other transition-metal compounds, such as compounds of vanadium, zirconium, chromium, molybdenum, or tungsten, can be mixed with the titanium compound. The titanium compound is usually a halide or oxyhalide, an organic metal halide, or a purely organometallic compound in which only organic ligands are linked to the transition metal. Halides of titanium, specifically TiCl₄, are especially preferred.

The alkoxy group of the phthalic acid ester used has at minimum 10 carbon atoms. Thus the ester used may be, for example, di-isodecyl phthalate (DIDP), the alkoxy group of which has 10 carbon atoms, and ditridecyl phthalate (DTDP), the alkoxy group of which has 13 carbon atoms. It is also advantageous if the phthalic acid ester serves as a so-called electron donor of the catalyst composition, the purpose being to improve the activity and/or stereospecificity of the polymer obtained. The molar ratio of the phthalic acid ester to the magnesium halide in the synthesis is preferably in the order of approx. 0.2.

The transesterification can be carried out, for example, by selecting a phthalic acid ester - lower alcohol pair which spontaneously, or with the help of a catalyst which does not damage the procatalyst composition, becomes transesterified in normal catalyst preparation conditions. However, it is necessary to use an elevated temperature to achieve the transesterification. Therefore the temperature is within the range 130-140 °C.

Since the boiling point of liquid TiCl₄ at normal pressure is approximately 136 °C, the treatment with it, i.e. the so-called titanation, can normally be carried out only at a temperature lower than this. Since usually the titanation medium used is a hydrocarbon solvent, e.g. heptane, hexane or pentane, having a considerably lower boiling point, the titanation temperature is in practice below 100 °C, at which temperature transesterification does not occur. Thus, in order to achieve transesterification, it is preferable to use higher boiling solvents, and, for example, nonane (b.p. 151 °C) and decane (b.p. 174 °C) are recommended. In this case it is possible to come closer to the boiling point of TiCl₄, and even exceed it as a titanation temperature, whereby a simultaneous transesterification reaction is made possible.

According to one embodiment, the transesterification is carried out by treating an adduct of magnesium dichloride and a C₁ to C₄ alcohol, MgCl₂*nR₁OH, where n is 1-6, with a titanium compound, for example by carrying out titanation with TiCl₄, whereupon evidently the following reaction occurs:

(1) MgCl₂*nR₁OH + nTiCl₄ = MgCl₂*nTiCl₃OR₁ + nHCl

When the donor, i.e. phthalic acid ester, is added to this titanated carrier, an adduct made up of all the components is probably produced:

(2) MgCl₂*nTiCl₃OR₁ + nR₃COOR₂ = MgCl₂*nTiCl₃OR₁*nR₃COOR₂

Since this adduct can be transesterified at a temperature above 110 °C, and advantageously above approx. 130 °C, the ester groups R₁ and R₂ change places:

(3) MgCl₂*nTiCl₃OR₁*nR₃COOR₂ = MgCl₂*nTiCl₃OR₂*nR₃COOR₁

When the residual material of the catalyst is removed by extraction, an adduct of the carrier and the ester donor is obtained, in which the alcohol-originating group in the ester has changed:

(4) MgCl₂*nTiCl₃OR₂*nR₃COOR₁ = MgCl₂*nR₃COOR₁ + nTiCl₃OR₂

If a sufficient amount of titanium is left on the carrier, it will serve as an active part of the procatalyst. Otherwise, a new titanation is carried out after the above-mentioned treatment, in order to ensure a sufficiently high titanium content, and thereby sufficiently high activity. The titanium separation of Formula (4) mainly concerns the inactive part of the titanium.

The present invention thus provides a procatalyst composition intended for the polymerization of olefins, the titanium and donor concentrations in the composition being low with respect to the activity of the catalyst. According to one embodiment, the procatalyst composition contains at maximum 2.0 % by weight Ti. Its molar ratio donor/Mg is preferably within the range 0.03-0.06 and/or its donor concentration is within the range 4-6 % by weight. According to one embodiment of the invention the alkoxy group of the phthalic acid ester has at minimum 10 carbon atoms, and the activity of the procatalyst composition is at minimum approximately 850 kg PP/g Ti when triethyl aluminum is used as the catalyst and cyclohexylmethyldimethoxy silane is used as the external donor.

The procatalyst composition according to the invention, intended for olefin polymerization, is preferably prepared
a) by causing an adduct of MgCl₂ and a C₁-C₄ alcohol to react with TiCl₄,
b) by causing the product of step a) to react with a phthalic acid ester the alkoxy group of which has at minimum 10 carbon atoms, in conditions in which transesterification occurs between the phthalic acid ester and the C₁-C₄ alcohol,
c) by washing the product,
d) by causing the final product of step c) to react with a titanium product.

In the polymerization method according to the invention, the polymerization is carried out preferably in the presence of an organometallic cocatalyst, such as trialkyl aluminum (e.g. triethyl aluminum), and an external donor, preferably of the type of cyclohexylmethyldimethoxy silane. The polymer formed contains, i.a., some titanium and donor and resembles morphologically the catalyst composition used. Propylene is a preferred olefin monomer.

According to one preferred embodiment of the invention, the phthalic acid ester used is di-isodecyl phthalate in order to obtain a polyolefin having a large proportion of pores 10-100 µm in diameter. According to another preferred embodiment, the phthalic acid ester used is ditridecyl phthalate in order to obtain a polyolefin having a large proportion of pores 1-10 µm in diameter.

The median diameter of pores in a polyolefin according to the invention is at minimum 15 µm, most preferably at minimum 25 µm. The pore volume is preferably at minimum 0.30 ml/g and preferably at minimum 0.40 ml/g.

Below, an example of an olefin polymerization is presented, wherein propylene is polymerized using a catalyst composition in which the catalyst used is a jet-crystallized MgCl₂ x 3 EtOH adduct, which is subsequently titanated with TiCl₄ in a hydrocarbon solvent in the presence of di-alkyl phthalates of different lengths. Propylene was polymerized in a hydrocarbon solvent by using the procatalyst composition thus obtained and a trialkylaluminum cocatalyst (triethylaluminum= TEA) and an external donor (cyclohexylmethyldimethoxy silane= CMMS). If a sufficiently high titanation temperature is used, transesterification will occur between the ethoxy groups originating in the carrier adduct and the long alkyl groups of the donor, and the donor compound will be diethyl phthalate (DEP). The following examples are intended only to illustrate the invention.

### Examples

### Donors studied

5 donors were studied in the trial series. They are all presented in Table 1. The donors studied were propylhexyl phthalate (PrHP), dioctyl phthalate (DOP), di-isodecyl phthalate (DIDP), and ditridecyl phthalate (DTDP). Di-isobutyl phthalate (DIBP) was also included in the trial series.

**Table 1**

| Internal donors studied | | | | |
|---|---|---|---|---|
| Experiment | Length of alkyl group | Donor | Molar mass g/mol | Density g/ml |
| 1 | 4 | DIBP | 278 | 1.00 |
| 2 | 6 | PrHP | 292 | 0.95 |
| 3 | 8 | DOP | 390 | 0.96 |
| 4 | 10 | DIDP | 446 | 0.96 |
| 5 | 13 | DTDP | 530 | 0.91 |

### Catalyst synthesis

0.1 mole of MgCl₂ x 3 EtOH was suspended in inert conditions in 250 ml of decane in a reactor. The solution was cooled to 15 °C, and 300 ml of cold TiCl₄ was added. The mixture was then heated under control to +20 °C. At this temperature, 0.02 mole of an internal donor was added. The molar ratio of the donor to MgCl₂ was 0.2 in all the catalyst syntheses. When all the synthesis reagents were present, the temperature was raised to 135 °C. Both the first titanation and the second titanation were carried out at this temperature. The catalyst synthesis was terminated by subjecting the reaction mixture to a wash.

To determine the particle size of the catalyst formed, the particle size distribution of the product was measured, and microscope pictures were taken of each sample. In addition, the chemical composition of the catalyst was measured by analyzing their Ti, Mg and donor concentrations. X-ray diffraction spectra were also taken in order to examine the changes occurring in the crystal structure.

### Trial polymerization

A trial polymerization in the following polymerization conditions was performed on all the catalysts. The reaction vessel used was a two-liter bench reactor. 20-30 mg of procatalyst was used in the trial polymerization. This amount was mixed with 620 µl of triethyl aluminum and 200 µl of a 25-% solution of CMMS in 30 ml of heptane. The polymerizations were carried out at +70 °C and at a propylene monomer pressure of 10 bar. The partial pressure of hydrogen during the polymerization was 0.2 bar. The polymerization lasted for 3 hours. At the beginning of each experiment, prepolymerization occurred during the 10 minutes during which the temperature and pressure rose to the desired polymerization conditions. The activity was measured on the basis of the polymerization yield. The soluble portion of polymer was measured by evaporating the measured proportion out from the polymerization solution. By using these standard polymerization conditions, a polymer material having a MFR of approx. 8 was prepared.

### Characterization of the polymerization batches

The bulk densities and particle size distributions (PSD) of all the polymerization runs were measured. Isotacticity was measured by heptane elution, and the isotactic index was determined from the results obtained from the evaporation residue measurements. The melt index was measured at 230 °C by using a 2.16 kg weight. For purposes of further documentation and comparison, microscope pictures were taken of all the polymer batches. Differential scanning calorimeter curves (DSC curves) were taken in order to characterize the melt behavior of the material. The specific surface area and pore volume distribution were measured by using Hg porosimeter equipment.

### RESULTS

Table 2 shows the symbols of all the catalysts and the corresponding polymers.

**Table 2**

| Symbols of the catalysts used in the study and the polymers | | |
|---|---|---|
| Length of alkyl group | Catalyst symbol | Polymer symbol |
| 4 | C-C-4 | 1 PP-C-4 |
| 6 | C-C-6 | 2 PP-C-6 |
| 8 | C-C-8 | 3 PP-C-8 |
| 10 | C-C-10 | 4 PP-C-10 |
| 13 | C-C-13 | 5 PP-C-13 |

### Titanium concentration in the catalyst

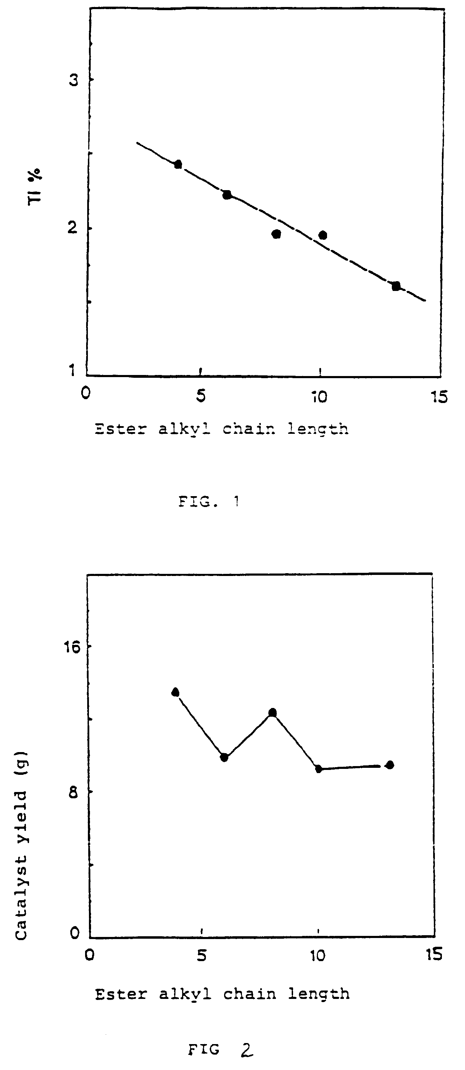

Table 3 shows the magnesium and titanium concentrations in the catalysts. The titanium concentration is also depicted in Figure 1. The results showed that, while the Mg concentrations remained substantially unchanged, a systematic drop in the Ti-concentration was observable in the catalyst series. The longer the alkyl chain in the alkoxy group of the donor, the lower the Ti concentration in the final procatalyst. The Ti concentration in the last catalyst of the series was 1.6 % by weight. This is a value 60 % smaller than the value of 4 % which was achieved in a standard synthesis and as much 30 % lower than the titanium concentration found in commercial high-yield catalysts. These results showed that the combination of transesterification and the effectiveness of the TiCl₃ x OEt wash works better when higher phthalic acid esters are used.

**Table 3**

| Mg and Ti concentrations in the catalysts | | |
|---|---|---|
| Length of alkyl chain | Mg (%) | Ti (%) |
| 4 | 18.1 | 2.4 |
| 6 | 20.8 | 2.2 |
| 8 | 22.0 | 1.9 |
| 10 | 20.0 | 1.9 |
| 13 | 17.3 | 1.6 |

### Catalyst yield from catalyst synthesis

Table 4 shows the respective catalyst yield from each catalyst synthesis, and the results are shown graphically in Figure 2. The same trend is observable as in the first measurements, namely, when the length of the phthalate alkyl chain increases and the titanium concentration decreases, the yield of catalyst also decreases. The yield decrease is very small, only approx. 25 %, and is explainable by the decrease of the concentration of TiCl₄ in the catalyst and by the weight decrease which occurs when an electron donor having a high molar mass is replaced by an electron donor having a lower molar mass. The decrease in the catalyst yield is also explainable by the decrease in the total donor concentration.

**Table 4**

| Catalyst yield from the catalyst synthesis | |
|---|---|
| Length of alkyl group | Yield (g) |
| 4 | 13.3 |
| 6 | 10.0 |
| 8 | 12.4 |
| 10 | 9.1 |
| 13 | 9.2 |

### Donor concentration in the catalysts

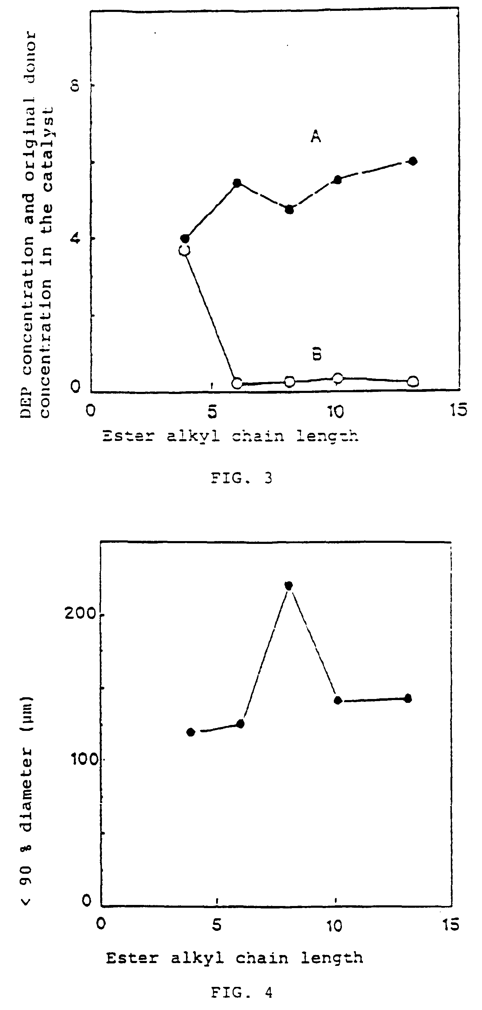

The donor concentrations in the catalysts were measured liquid chromatometrically by the HPLC method. The results are listed in Table 5, and they are shown graphically in Figure 3. A small fraction of mixed esters and a small fraction of phthalic acid anhydride were observed in all the catalysts. As can be seen in Figure 3, the transesterification was not complete for the first catalyst of the trial series. The transesterification degree of DIBP was only 70 %. This means that DIBP is not completely transesterified at a temperature of 135 °C. In all the other syntheses the transesterification was complete. Only traces of the original ester were found in their products. The amount of transesterified diethyl phthalate DEP found in the catalysts was approximately constant, and close to 5 %. This corresponds to a D/Mg ratio of 0.03-0.04 (D = donor), which is an even lower value than that attained when DIBP was transesterified at 143 °C.

These results show that transesterification improves when longer alkyl chains are used in the phthalic acid esters. It is also evident that a low molar ratio of electron donor to MgCl₂ is achieved.

**Table 5**

| Donor composition of catalysts. PA = acid anhydride and IE = mixed esters produced during transesterification | | | | |
|---|---|---|---|---|
| Length of alkyl group | Original (%) | DEP (%) | PA (%) | IE (%) |
| 4 | 3.6 | 4.0 | 1.3 | 1.0 |
| 6 | 0.2 | 5.3 | 0.3 | 0.9 |
| 8 | 0.3 | 4.8 | 0.7 | 0.4 |
| 10 | 0.4 | 5.3 | 1.1 | 0.5 |
| 13 | 0.2 | 5.9 | 0.7 | 0.4 |

### Particle size distributions (PSD) of the catalysts

The PSDs of the catalysts were also measured, and the results are shown in Table 6. Figure 4 shows the mean particle diameter of a fraction containing more than 90 % of the particles, as a function of the length of the alkyl chain of the donor. The results show that, as the donor composition changed, the PSD also changed greatly. It was observable at the same time that the catalyst particles agglomerated when higher phthalic acid esters were used. This agglomeration can be seen in the PSD curves of Figures 5, 6 and 7 and in the microscope pictures of Figures 8, 9 and 10. The results also showed that the agglomeration decreased somewhat when the highest phthalic acid esters were used. By the use of DIDP (C = 10), very beautifully formed catalyst particles having a diameter of approx. 140 µm were obtained. This is evident from Figure 10.

**Table 6**

| Particle distributions of the catalysts | | | |
|---|---|---|---|
| Length of alkyl group | D (0.9) µm | D (0.5) µm | D (0.1) µm |
| 4 | 117 | 62 | 34 |
| 6 | 127 | 68 | 36 |
| 8 | 218 | 76 | 17 |
| 10 | 138 | 56 | 18 |
| 13 | 140 | 69 | 36 |

### X-ray diffraction spectra of the catalysts

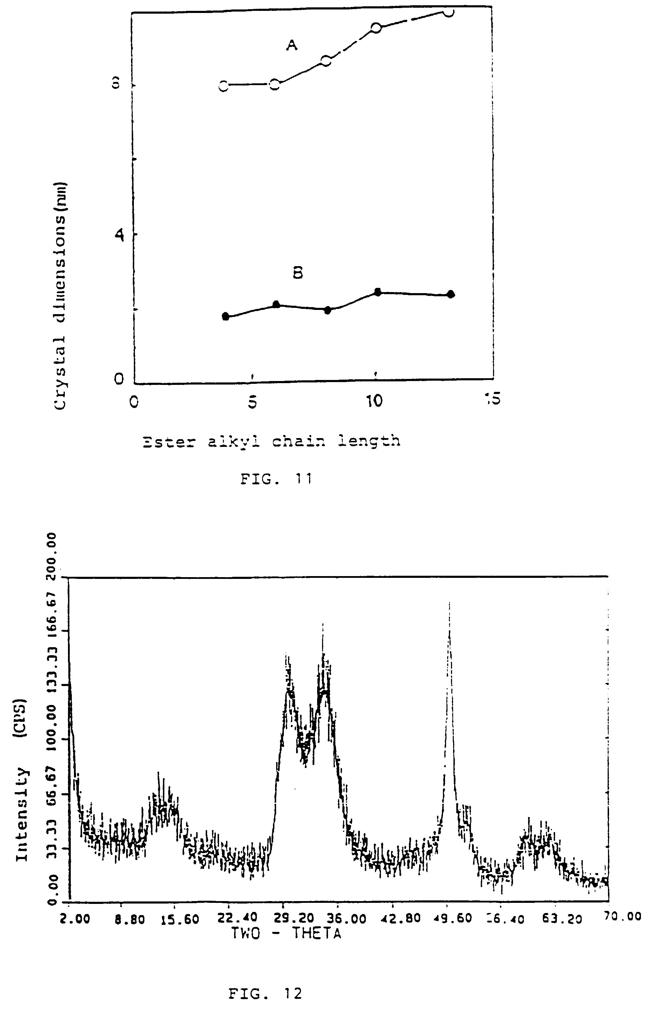

As a result of the transesterification, a new procatalyst structure was produced, which is evident from the double peak at 13-15°. To follow up the effect of higher phthalate esters, X-ray patterns were taken of all the catalysts of the trial series. Table 7 lists the crystal dimensions deduced from the patterns, and the results are also shown in Figure 11. According to the results, a crystal widened systematically as the alkyl chain of the ester lengthened. Crystals 25 % wider were obtained with DTDP than with DIBP.

Figure 12 shows the X-ray diffraction spectrum of the catalyst C-C-6. According to the pattern, recrystallization occurs in the MgCl₂ crystal lattice, which is evident as a sharpening of the crystal peak at 30° and 35°. The formation of a double peak at 13-15° is also visible.

**Table 7**

| Crystal dimensions of the MgCl₂ material in the catalysts | | | |
|---|---|---|---|
| Length of alkyl group | Height (nm) | Cutting planes Width (nm) | Growth (%) |
| 4 | 1.8 | 7.9 | 0 |
| 6 | 2.1 | 7.9 | 0 |
| 8 | 1.9 | 8.4 | 6 |
| 10 | 2.3 | 9.3 | 18 |
| 13 | 2.2 | 9.8 | 24 |

### Surface areas and pore volumes of the catalysts

Both the surface areas and the pore volumes of the catalysts were measured. The results are listed in Table 8. According to the results, the surface area of a catalyst remained almost unchanged regardless of the donor used in the synthesis. The specific surface area attained was in the order of approx. 300 m²/g. On the other hand, the pore volume increased when a shift was made to longer-chain donors. In the last catalyst of the series, an increase as high as 60 % was observed. The increase in the pore volume is partly explainable by the agglomeration of catalyst particles.

**Table 8**

| Specific surface areas and pore volumes of the catalysts | | |
|---|---|---|
| Length of alkyl group | Surface area (m²/g) | Pore volume (ml/g) |
| 4 | 348 | 0.524 |
| 6 | 316 | 0.738 |
| 8 | 311 | 0.581 |
| 10 | 339 | 0.776 |
| 13 | 292 | 0.814 |

### Activities of the catalysts

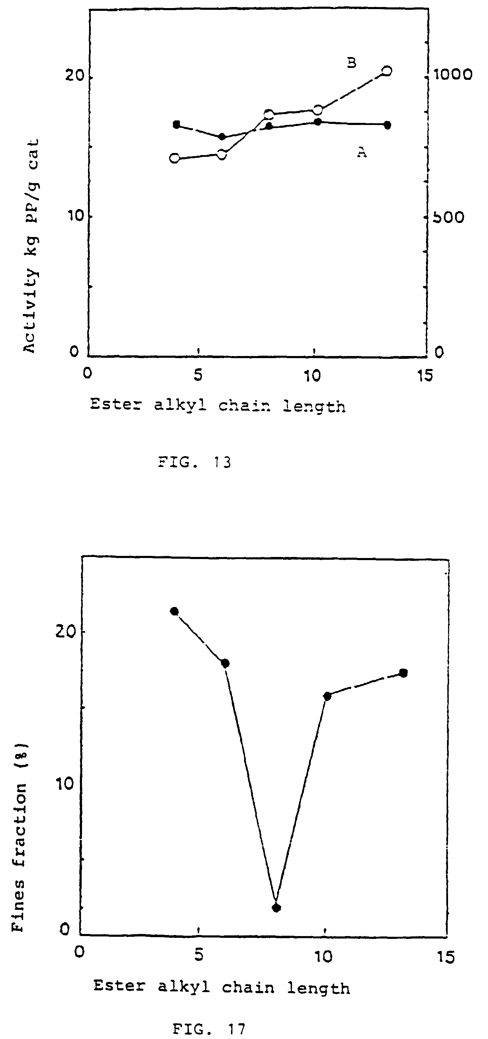

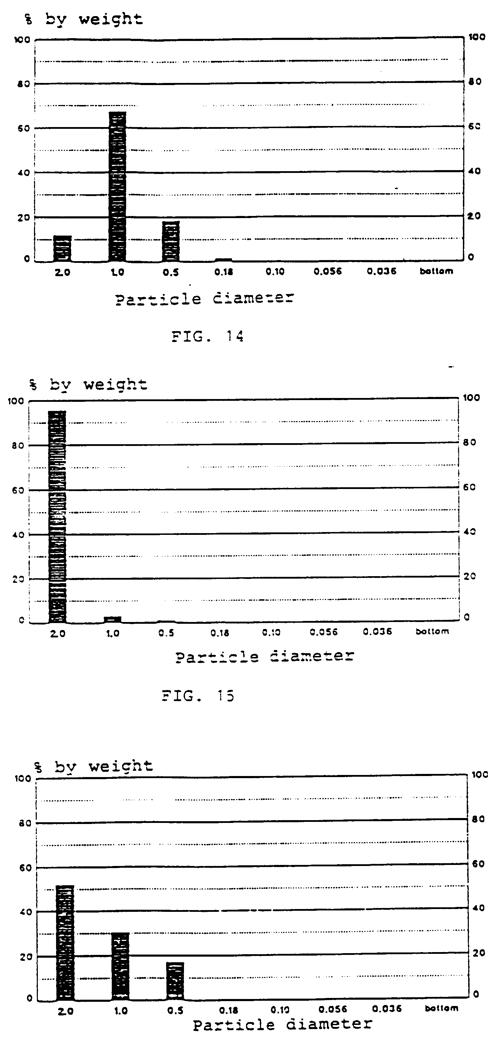

All of the catalysts were trial polymerized in the conditions referred to above. The results are shown in Table 9 and in Figure 13. The activity based on the weight of the catalyst and the polymer remained constant for the whole catalyst series, and was approx. 16 kg/g cat. Expressed using the unit kg PP/g Ti, the activity increased systematically. This was due to the fact that the Ti concentration decreased respectively when a shift was made to higher phthalic acid esters. Thus an activity value of 1019 kg PP/g Ti was obtained for the last catalyst. When decane was used as the activation medium, the catalyst activity was somewhat lower.

**Table 9**

| Catalyst activity | | |
|---|---|---|
| Length of alkyl group | Activity (kg PP/g cat.) | Activity (kg PP/g Ti) |
| 4 | 16.6 | 692 |
| 6 | 15.6 | 709 |
| 8 | 16.2 | 853 |
| 10 | 16.6 | 874 |
| 13 | 16.3 | 1019 |

### Particle size distributions (PSD) of the polymers

Table 10 shows the PSD of the polymers together with the total amount of fines, i.e. particles of less than 1 mm. The amount of the fines fraction is also shown graphically in Figure 17. The polymer PSD results follow the same formula as the catalyst PSD results. This can be seen in the PSD diagrams in Figures 14, 15 and 16.

**Table 10**

| Particle size distributions of the polymers | | | | | | | |
|---|---|---|---|---|---|---|---|
| Alkyl length | % <2.0 mm | % <1.0 mm | % <0.5 mm | % <0.18 mm | % <0.10 mm | % <0.056 mm | Remainder (%) |
| 4 | 12.0 | 67.4 | 18.5 | 1.8 | 0.2 | 0.1 | 20.6 |
| 6 | 10.7 | 71.3 | 17.7 | 0.2 | 0.1 | 0.0 | 18.0 |
| 8 | 95.0 | 3.1 | 1.1 | 0.5 | 0.2 | 0.1 | 1.9 |
| 10 | 14.6 | 69.4 | 15.5 | 0.5 | 0.2 | 0.0 | 16.0 |
| 13 | 52.1 | 30.4 | 17.1 | 0.2 | 0.1 | 0.1 | 17.5 |

### Bulk densities of the polymers

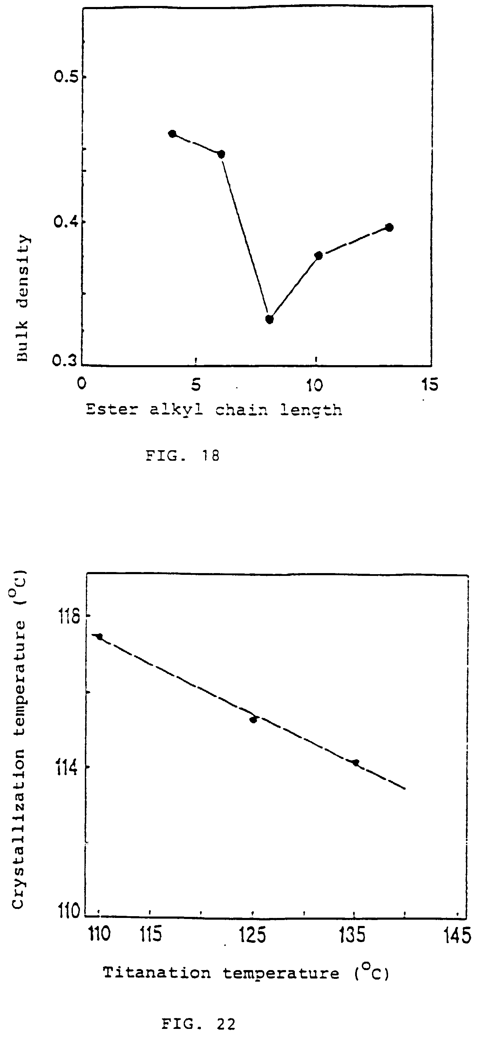

The bulk density decreased when higher phthalic acid esters were used in the transesterification syntheses. The results are listed in Table 11 and depicted in Figure 18.

**Table 11**

| Bulk densities of the polymers | |
|---|---|
| Length of alkyl group | Bulk density (g/ml) |
| 4 | 0.46 |
| 6 | 0.44 |
| 8 | 0.33 |
| 10 | 0.37 |
| 13 | 0.39 |

### Melt indices of the polymers

The ester chain length did not have great effect on the melt index. The results are shown in Table 12.

**Table 12**

| Melt indices of the polymers | |
|---|---|
| Length of alkyl group | Melt index (2.16 kg) |
| 4 | 10.5 |
| 6 | 9.3 |
| 8 | 10.0 |
| 10 | 7.3 |

### Molecular weights of the polymers

No systematic changes in the molecular weight distribution were observable as the esters changed. All the results are listed in Table 13. The results correspond to results normally obtained in standard polymerization.

**Table 13**

| Molecular weight distributions of the polymers | | | | |
|---|---|---|---|---|
| Length of alkyl group | Mn | Mw | Mv | D |
| 4 | 58 100 | 273 000 | 223 000 | 4.7 |
| 4 | 58 800 | 274 000 | 222 000 | 4.7 |
| | | | | |
| 6 | 56 000 | 281 000 | 225 000 | 5.2 |
| 6 | 55 200 | 289 000 | 233 000 | 5.2 |
| | | | | |
| 8 | 60 100 | 273 000 | 221 000 | 4.6 |
| 8 | 60 700 | 279 000 | 228 000 | 4.6 |
| | | | | |
| 10 | 73 800 | 331 000 | 269 000 | 4.5 |
| 10 | 74 600 | 334 000 | 270 000 | 4.5 |

### Results of polymer DSC measurements

Table 14 lists the melting points, crystallization points and crystallinity percentages of the polymers. In this, also, no systematic dependence on the esters used was observable. The melting point is approx. 161 °C and the crystallization temperature is approx. 114 °C. Crystallinity is approx. 51-52 %. Figures 19, 20 and 21 show a number of melting curves.

It can be stated in general that there prevails a correlation between the catalyst titanation temperature and the crystallization temperature. A higher titanation temperature yields a purer catalyst and a more homogeneous polypropylene. This, for its part, increases the crystallinity of the polymer and lowers its crystallization temperature. Figure 22 shows diagrammatically the correlation between the catalyst titanation temperature and the polymer crystallization temperature.

**Table 14**

| Melting points, crystallization temperatures and crystallinity percentages of the polymers | | | |
|---|---|---|---|
| Length of alkyl group | Melting point (°C) | Crystallization point (°C) | Crystallinity (%) |
| 4 | 161.6 | 114.1 | 51.4 |
| 6 | 161.0 | 113.5 | 50.7 |
| 8 | 161.6 | 113.4 | 51.8 |
| 10 | 161.6 | 114.7 | 52.7 |
| 13 | 158.3, 164.3 | 114.8 | 51.9 |

### Specific surface area and pore volume distributions of the polymers

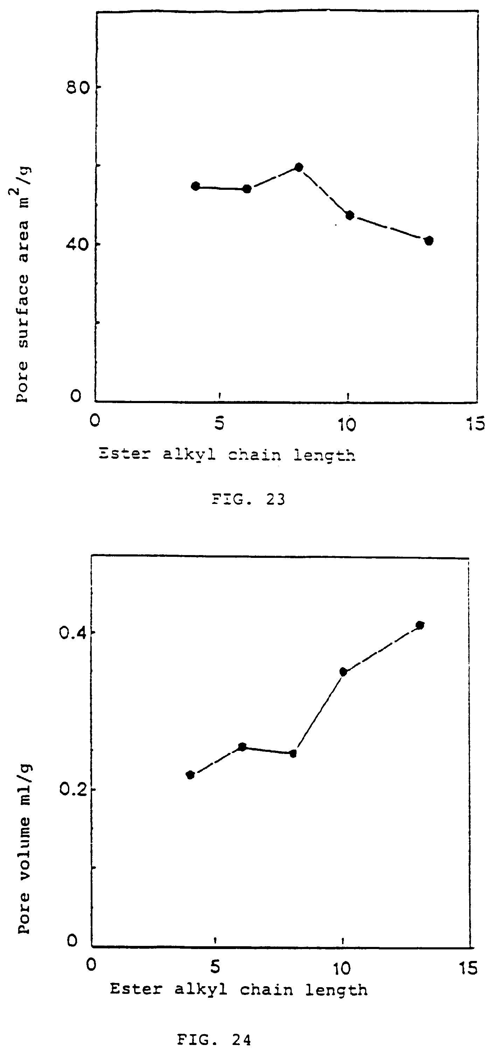

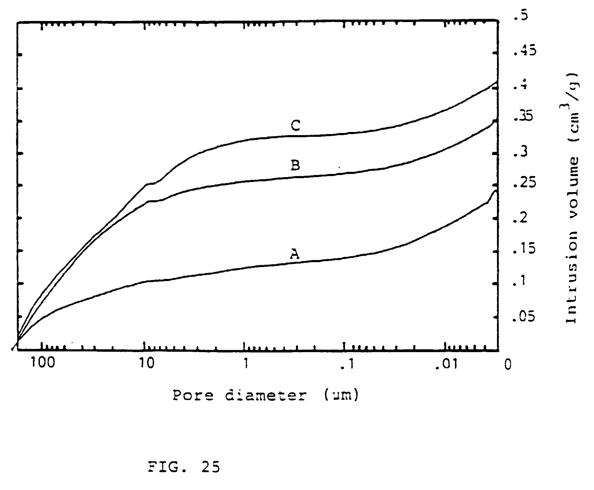

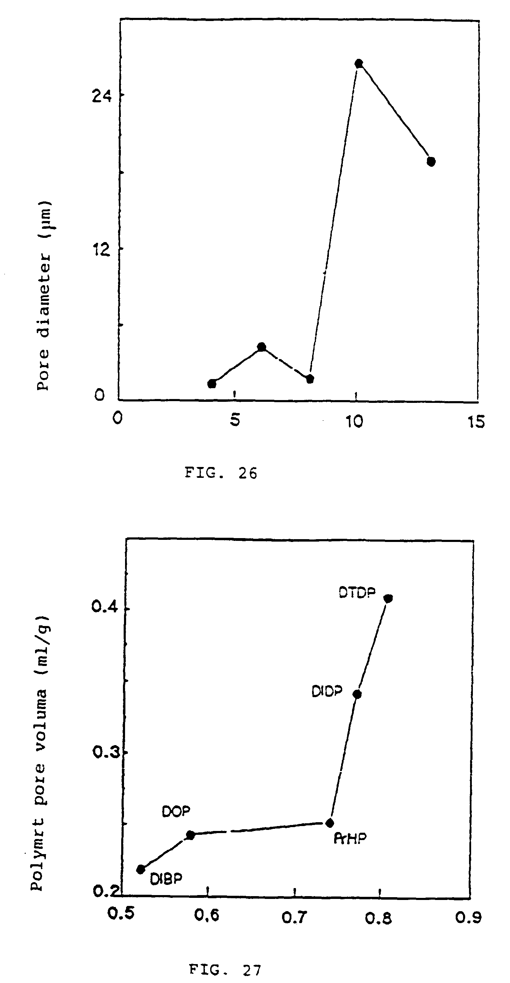

Table 15 shows the results of the surface area and pore volume measurements. The measurements were carried out using Hg-porosimeter equipment. The results corresponded to the results obtained with the corresponding catalysts. As is evident from Figure 23, the specific surface area of the pores decreases only slightly when higher phthalic acid esters are used in the transesterification synthesis. The pore volume, for its part, increased linearly according to the length of the alkyl chain in the phthalic acid ester, as shown in Figure 24. The increase was approx. 100 % for the last polymer of the series, as compared with the first polymer of the series. When the results were examined in greater detail, it was found that the pore volume increase was manifested as an increase in the number of pores of a certain size, depending on the phthalic acid ester used. According to Figure 25, DIDP greatly increased the proportion of the large-pore fraction (10-100 µm), whereas DTDP increased the proportion of small pores (1-10 µm). This last result is not explainable by agglomeration, since agglomeration was not considerable in these last experiments. As a consequence of the pore volume increase, the median diameter in the pore size distribution increases up to decyl ester, whereafter there is a slight drop; see Figure 26. Figure 27 shows a comparison of the pore volumes of the catalysts and the polymers. According to the figure, the pore volume of the polymers increases drastically when the pore volume of the catalysts exceeds 0.7 ml/g. Until that the polymer pore volume is stable within the range 0.22-0.25 ml/g, but thereafter the polymer pore volume increases rapidly beyond 0.4 ml/g.

**Table 15**

| Specific surface areas, pore volumes, and median diameters of pores of the polymers | | | |
|---|---|---|---|
| Length of alkyl group | Surface area (m²/g) | Pore volume (ml/g) | Pore diameter (µm) |
| 4 | 53.5 | 0.22 | 1.2 |
| 6 | 52.4 | 0.25 | 4.9 |
| 8 | 58.5 | 0.24 | 1.5 |
| 10 | 46.0 | 0.35 | 26.3 |
| 13 | 41.2 | 0.41 | 18.8 |

### Brief description of the drawings

Figure 1. Ti concentration in the catalysts as a function of the alkyl group chain length in the donor.

Figure 2. Total catalyst yield of the catalyst synthesis as a function of the alkyl group chain length in the donor.

Figure 3. Concentrations, produced in the catalyst synthesis, of the transesterified donor DEP (A) and the original donors (B).

Figure 4. Diameter of the large particle fraction (< 90 %) as a function of the alkyl group chain length in the donor.

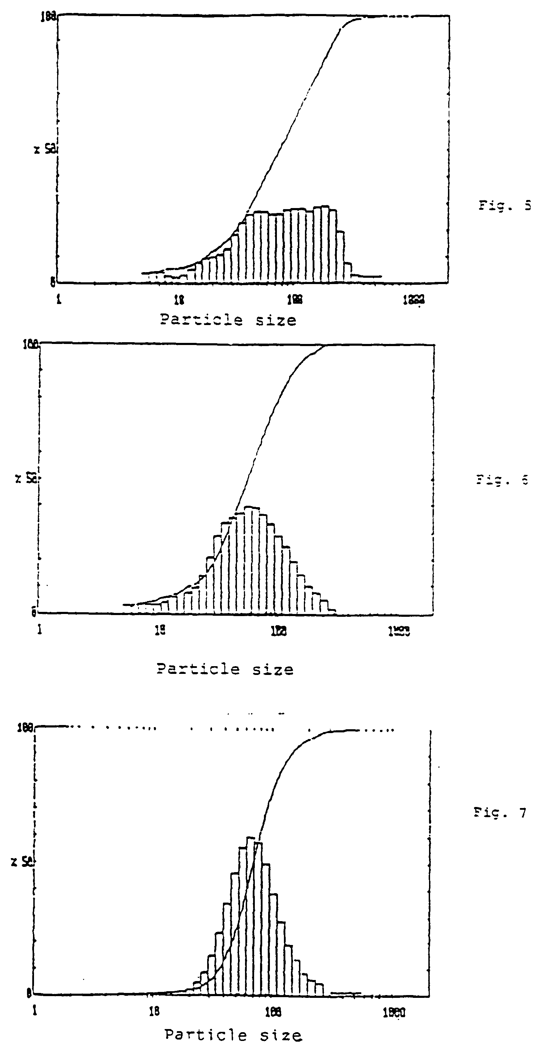

Figure 5. Catalyst particle size distribution when octyl phthalate (C = 8) was used as an internal donor.

Figure 6. Catalyst particle size distribution when decyl phthalate (C = 10) was used as an internal donor.

Figure 7. Catalyst particle size distribution when tridecyl phthalate (C = 13) was used as an internal donor.

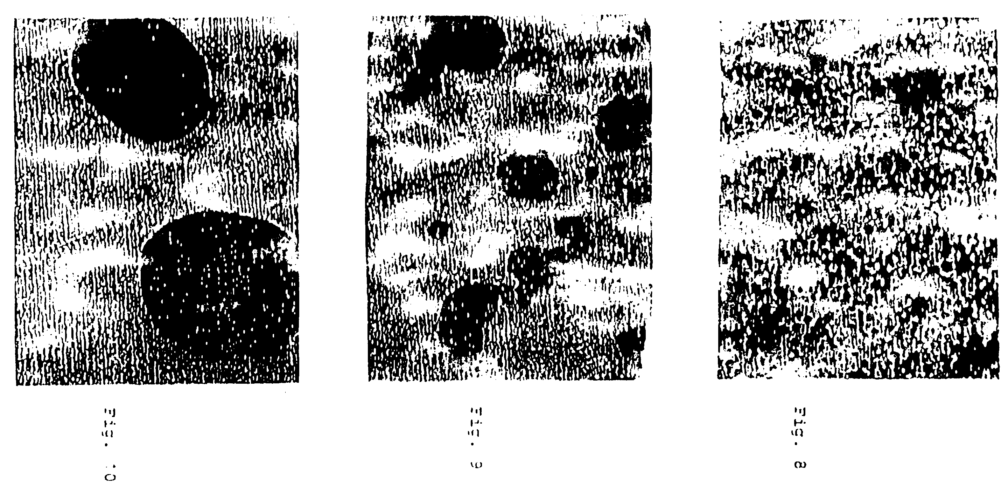

Figure 8. Microscope picture of the catalyst C-C-4. C = 4, unit = 25 µm.

Figure 9. Microscope picture of the catalyst C-C-8. C = 8, unit = 50 µm.

Figure 10. Microscope picture of the catalyst C-C-10. C = 8, unit = 50 µm.

Figure 11. Width (A) and height (B) of the MgCl₂ crystal as a function of the alkyl group chain length in the donor.

Figure 12. X-ray pattern of the catalyst C-C-6, in which internal donor PrHP has been transesterified to DEP. A double peak is observable at 13-15°.

Figure 13. Catalyst activity as a function of the alkyl group chain length in the donor. Curve (A) refers to the unit kg PP/g cat. and curve (B) to the unit kg PP/g Ti.

Figure 14. Particle size distribution of the polymer PP-C-4 (C = 4).

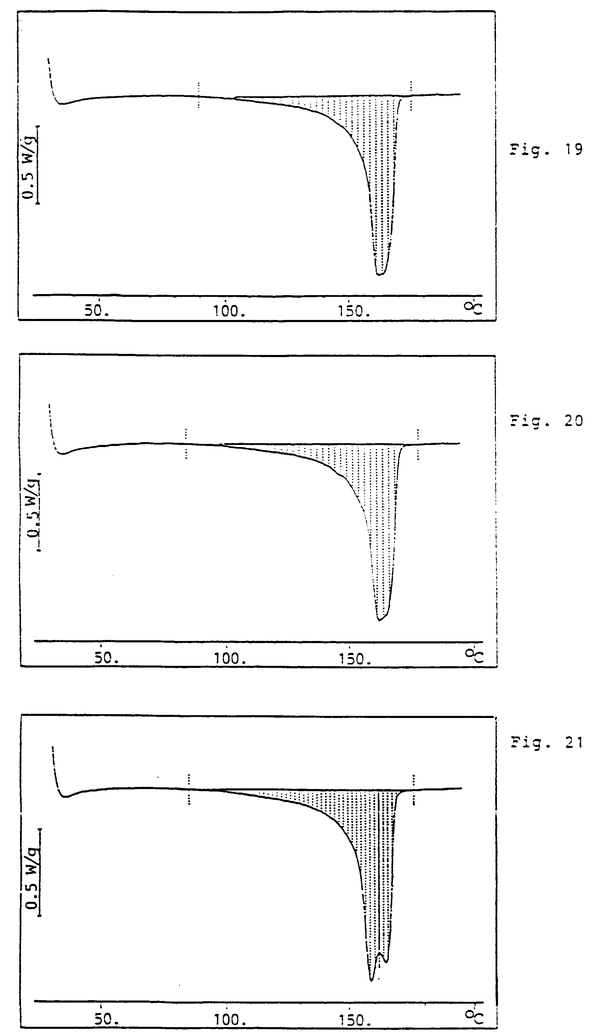

Figure 15. Particle size distribution of the polymer PP-C-8 (C = 8).

Figure 16. Particle size distribution of the polymer PP-C-13 (C = 13).

Figure 17. Total amount of fines fraction (d < 1 mm) as a function of the alkyl group chain length in the donor.

Figure 18. Bulk density of the polymers as a function of the alkyl group chain length in the donor.

Figure 19. DSC (differential scanning calorimeter) curve of the polymer PP-C-4.

| | |
|---|---|
| Rate: | 10.0 °C/min |
| Integration | |
| Delta H | 334 mJ |
| | 107.5 J/g |
| Peak | 161.6 °C |
| | -1.2 W/g |
| Content | 51.4 % |
| Ref dH | 209.0 J/g |

Figure 20. DSC curve of the polymer PP-C-8.

| | |
|---|---|
| Rate: | 10.0 °C/min |
| Integration | |
| Delta H | 352 mJ |
| | 108.3 J/g |
| Peak | 161.6 °C |
| | -1.2 W/g |
| | |
| Content | 51.8 % |
| Ref dH | 209.0 J/g |

Figure 21. DSC curve of the polymer PP-C-13.

| | |
|---|---|
| Rate: | 10.0 °C |
| Integration | |
| Delta H | 247 mJ |
| | 76.7 J/g |
| Peak | 158.3 °C |
| | -1.1 W/g |
| Integration | |
| Delta H | 102 mJ |
| | 31.7 J/g |
| Peak | 164.3 °C |
| | -1.0 W/g |

Figure 22. Crystallization temperature of polypropylene as a function of the titanation (TiCl₄ treatment) temperature used in the catalyst synthesis.

Figure 23. Pore surface area (m²/g) in the polymers as a function of the alkyl group chain length in the donor.

Figure 24. Pore volume (ml/g) in the polymers as a function of the chain length of the alkyl group in the donor.

Figure 25. Pore volume distributions of polymers PP-C-8 (A), PP-C-10 (B) and PP-C-13 (C).

Figure 26. Median pore diameter of the polymers as a function of the alkyl chain length.

Figure 27. Correlation between the pore volumes in the catalyst and in the polymer.

## Claims

1. A method for the preparation of polyolefins by polymerizing olefin by means of a procatalyst composition prepared by bringing together MgCl₂, a C₁-C₄ alcohol, a titanium compound, and a phthalic acid ester, **characterized** in that a polyolefin having a median pore diameter of at least 15 µm is obtained by using a procatalyst, in the preparation of which a transesterification has been carried out at a temperature of 130 to 140°C between the C₁-C₄ alcohol and the phthalic acid ester, and the phtalic acid ester selected is one having at minimum ten carbon atoms in its alkoxy group.

2. A method according to Claim 1, **characterized** in that the olefin used is propylene.

3. A method according to Claim 1 or 2, **characterized** in that the C₁-C₄ alcohol is ethanol.

4. A method according to Claim 1, 2 or 3, **characterized** in that the titanium compound is TiCl₄.

5. A method according to any of the above claims, **characterized** in that the phthalic acid ester is di-isodecyl phthalate or ditridecyl phthalate.

6. A method according to any of the above claims, **characterized** in that olefin is polymerized by using an organometallic cocatalyst.

7. A method according to Claim 6, **characterized** in that the organometallic cocatalyst is a trialkyl aluminum.

8. A method according to Claim 6 or 7, **characterized** in that the olefin is polymerized by using an external donor.

9. A method according to any of the above claims, **characterized** in that the phthalic acid ester used is di-isodecyl phthalate to produce a polyolefin in which the proportion of pores 10-100 µm in diameter is high.

10. A method according to any of claims 1 to 8, **characterized** in that the phthalic acid ester used is ditridecyl phthalate to produce a polyolefin in which the proportion of pores 1-10 µm in diameter is high.

11. A polyolefin obtained by polymerizing olefin in the presence of a procatalyst prepared by bringing together MgCl₂, a C₁-C₄ alcohol, a titanium compound and a phthalic acid ester, **characterized** in that it has pores having a median pore diameter of least 15 µm which have been obtained by using a procatalyst of said type, in the preparation of which a transesterification has been carried out between the C₁-C₄ alcohol and the phthalic acid ester at a temperature of between 130 and 140°C, and the phthalic acid ester selected is one having at minimum ten carbon atoms in its alkoxy group.

12. A polyolefin according to Claim 11, **characterized** in that its pore volume is at minimum 0.30 ml/g.

13. A procatalyst composition suitable for the preparation of a polyolefin having a median pore diameter of least 15 µm , the composition having been prepared by bringing together MgCl₂, a C₁-C₄ alcohol, a titanium compound and a phthalic acid ester, **characterized** in that a transesterification has been performed between the C₁-C₄ alcohol and the phthalic acid ester at a temperature of between 130 and 140°C, and that a minimum of 10 carbon atoms has been used in the alkoxy group of the phthalic acid ester.

14. A procatalyst composition according to Claim 13, **characterized** in that the transesterification has been carried out in nonane or decane.

15. A procatalyst composition according to Claim 13 or 14, **characterized** in that the C₁-C₄ alcohol is ethanol.

16. A procatalyst composition according to any of claims 13-15, **characterized** in that the titanium compound is TiCl₄.

17. A procatalyst composition according to any of claims 13-16, **characterized** in that it has been prepared
a) by causing an adduct of MgCl₂ and the C₁-C₄ alcohol to react with the titanium compound,
b) by causing the product of step a) to react with a phthalic acid ester, the alkoxy group of which has at minimum 10 carbon atoms, whereupon transesterification takes place between the C₁-C₄ alcohol and the phthalic acid ester,
c) by washing the product, and
d) by causing the product of step c) to react with the titanium compound.

18. A procatalyst composition according to any of claims 13-17, **characterized** in that the phthalic acid ester is di-isodecyl phthalate or ditridecyl phthalate.

## Patentansprüche

1. Verfahren zur Herstellung von Polyolefinen durch Polymerisation eines Olefins mittels einer Prokatalysatorzusammensetzung, die hergestellt wird, indem MgCl₂, ein C₁-C₄-Alkohol, eine Titanverbindung und ein Phthalsäureester zusammengebracht werden, dadurch gekennzeichnet, daß ein Polyolefin mit einem mittleren Porendurchmesser von mindestens 15 µm unter Verwendung eines Prokatalysators erhalten wird, bei dessen Herstellung eine Umesterung bei einer Temperatur von 130 bis 140°C zwischen dem C₁-C₄-Alkohol und dem Phthalsäureester durchgeführt worden ist, wobei der gewählte Phthalsäureester ein Minimum von 10 Kohlenstoffatomen in seiner Alkoxygruppe aufweist.

2. Verfahren nach Anspruch 1, dadurch gekennzeichnet, daß das verwendete Olefin Propylen ist.

3. Verfahren nach Anspruch 1 oder 2, dadurch gekennzeichnet, daß der C₁-C₄-Alkohol Ethanol ist.

4. Verfahren nach Anspruch 1, 2 oder 3, dadurch gekennzeichnet, daß die Titanverbindung TiCl₄ ist.

5. Verfahren nach einem der vorstehenden Ansprüche, dadurch gekennzeichnet, daß der Phthalsäureester Diisodecylphthalat oder Ditridecylphthalat ist.

6. Verfahren nach einem der vorstehenden Ansprüche, dadurch gekennzeichnet, daß das Olefin unter Verwendung eines organometallischen Cokatalysators polymerisiert wird.

7. Verfahren nach Anspruch 6, dadurch gekennzeichnet, daß der crganometallische Cokatalysator ein Trialkylaluminium ist.

8. Verfahren nach Anspruch 6 oder 7, dadurch gekennzeichnet, daß das Olefin unter Verwendung eines äußeren Donors polymerisiert wird.

9. Verfahren nach einem der vorstehenden Ansprüche, dadurch gekennzeichnet, daß der verwendete Phthalsäureester Diisodecylphthalat ist, um ein Polyolefin herzustellen, bei dem der Anteil von Poren mit einem Durchmesser von 10 bis 100 µm hoch ist.

10. Verfahren nach einem der Ansprüche 1 bis 8, dadurch gekennzeichnet, daß der verwendete Phthalsäureester Ditridecylphthalat ist, um ein Polyolefin herzustellen, bei dem der Anteil der Poren mit einem Durchmesser von 1 bis 10 µm hoch ist.

11. Durch Polymerisation eines Olefins in Gegenwart eines Prokatalysators, der hergestellt wird, indem MgCl₂, ein C₁-C₄-Alkohol, eine Titanverbindung und ein Phthalsäureester zusammengebracht werden, erhaltenes Polyolefin, dadurch gekennzeichnet, daß es Poren mit einem mittleren Porendurchmesser von mindestens 15 µm aufweist, die unter Verwendung eines Prokatalysators des genannten Typs erhalten werden, wobei bei dessen Herstellung eine Umesterung zwischen dem C₁-C₄-Alkohol und dem Phthalsäureester bei einer Temperatur zwischen 130 und 140°C durchgeführt worden ist und der gewählte Phthalsäureester ein Ester mit einem Minimum von 10 Kohlenstoffatomen in seiner Alkoxygruppe ist.

12. Polyolefin nach Anspruch 11, dadurch gekennzeichnet, daß sein Porenvolumen mindestens 0,30 ml/g beträgt.

13. Prokatalysatorzusammensetzung, die sich für die Herstellung eines Polyolefins mit einem mittleren Porendurchmesser von mindestens 15 µm eignet, wobei die Zusammensetzung hergestellt wird, indem MgCl₂, ein C₁-C₄-Alkohol, eine Titanverbindung und ein Phthalsäureester zusammengebracht werden, dadurch gekennzeichnet, daß eine Umesterung zwischen dem C₁-C₄-Alkohol und dem Phthalsäureester bei einer Temperatur zwischen 130 und 140°C durchgeführt wird und daß ein Minimum von 10 Kohlenstoffatomen in der Alkoxygruppe des Phthalsäureesters verwendet wird.

14. Prokatalysatorzusammensetzung nach Anspruch 13, dadurch gekennzeichnet, daß die Umesterung in Nonan oder Decan durchgeführt wird.

15. Prokatalysatorzusammensetzung nach Anspruch 13 oder 14, dadurch gekennzeichnet, daß der C₁-C₄-Alkohol Ethanol ist.

16. Prokatalysatorzusammensetzung nach einem der Ansprüche 13 bis 15, dadurch gekennzeichnet, daß die Titanverbindung TiCl₄ ist.

17. Prokatalysatorzusammensetzung nach einem der Ansprüche 13 bis 16, dadurch gekennzeichnet, daß sie hergestellt wird, indem
a) ein Addukt aus MgCl₂ und dem C₁-C₄-Alkohol mit der Titanverbindung umgesetzt wird;
b) das Produkt von Stufe a) mit einem Phthalsäureester umgesetzt wird, dessen Alkoxygruppe mindestens 10 Kohlenstoffatome aufweist, wobei die Umesterung zwischen dem C₁-C₄-Alkohol und dem Phthalsäureester stattfindet;
c) das Produkt gewaschen wird; und
d) das Produkt von Stufe c) mit der Titanverbindung umgesetzt wird.

18. Prokatalysatorzusammensetzung nach einem der Ansprüche 13 bis 17, dadurch gekennzeichnet, daß es sich bei dem Phthalsäureester um Diisodecylphthalat oder Ditridecylphthalat handelt.

## Revendications

1. Procédé de préparation de polyoléfines, par polymérisation d'une oléfine au moyen d'une composition de pré-catalyseur, préparée par mise en contact de MgCl₂, d'un alcool en C₁-C₄, d'un composé du titane et d'un ester d'acide phtalique, caractérisé en ce qu'une polyoléfine ayant un diamètre moyen de pore d'au moins 15 µm est obtenue en utilisant un pré-catalyseur dans la préparation duquel une transestérification a été réalisée, à une température de 130 à 140°C, entre l'alcool en C₁-C₄ et l'ester d'acide phtalique, ce dernier étant choisi parmi ceux ayant au moins 10 atomes de carbone dans le groupe alcoxy.

2. Procédé selon la revendication 1, caractérisé en ce que l'oléfine utilisée est le propylène.

3. Procédé selon la revendication 1 ou 2, caractérisé en ce que l'alcool en C₁-C₄ est l'éthanol.

4. Procédé selon la revendication 1, 2 ou 3, caractérisé en ce que le composé du titane est TiCl₄.

5. Procédé selon l'une quelconque des revendications précédentes, caractérisé en ce que l'ester d'acide phtalique est le phtalate de di-isodécyle ou le phtalate de ditridécyle.

6. Procédé selon l'une quelconque des revendications précédentes, caractérisé en ce que l'oléfine est polymérisée en utilisant un co-catalyseur organométallique.

7. Procédé selon la revendication 6, caractérisé en ce que le co-catalyseur organométallique est un trialkyl aluminium.

8. Procédé selon la revendication 6 ou 7, caractérisé en ce que l'oléfine est polymérisée en utilisant un donneur extérieur.

9. Procédé selon l'une quelconque des revendications précédentes, caractérisé en ce que l'ester d'acide phtalique utilisé est le phtalate de di-isodécyle pour produire une polyoléfine dans laquelle la proportion des pores de 10 à 100 µm de diamètre est élevée.

10. Procédé selon l'une quelconque des revendications 1 à 8, caractérisé en ce que l'ester d'acide phtalique utilisé est le phtalate de ditridécyle pour produire une polyoléfine dans laquelle la proportion des pores de 1 à 10 µm de diamètre est élevée.

11. Polyoléfine obtenue par polymérisation d'une oléfine en présence d'un pré-catalyseur préparé par mise en contact de MgCl₂, d'un alcool en C₁-C₄, d'un composé du titane et d'un ester d'acide phtalique, caractérisée en ce qu'elle possède des pores ayant un diamètre moyen d'au moins 15 µm, qui a été obtenue en utilisant un pré-catalyseur dudit type, dans la préparation duquel une transestérification a été réalisée entre un alcool en C₁-C₄ et l'ester d'acide phtalique à une température comprise entre 130 et 140°C, et que l'ester d'acide phtalique est choisi parmi ceux ayant au moins 10 atomes de carbone dans le groupe alcoxy.

12. Polyoléfine selon la revendication 11, caractérisée en ce que son volume de pore est d'au moins 0,30 ml/g.

13. Composition de pré-catalyseur appropriée pour la préparation d'une polyoléfine ayant un diamètre moyen de pore d'au moins 15 µm, la composition ayant été préparée par mise en contact de MgCl₂, d'un alcool en C₁-C₄, d'un composé du titane et d'un ester d'acide phtalique, caractérisé en ce qu'une transestérification a été réalisée entre l'alcool en C₁-C₄ et l'ester d'acide phtalique à une température comprise entre 130 et 140°C, et que l'ester d'acide phtalique choisi comprend au moins 10 atomes de carbone dans le groupe alcoxy.

14. Composition de pré-catalyseur selon la revendication 13, caractérisée en ce que la transesterification a été réalisée dans du nonane ou du décane.

15. Composition de pré-catalyseur selon la revendication 13 ou 14, caractérisée en ce que l'alcool en C₁-C₄ est l'éthanol.

16. Composition de pré-catalyseur selon l'une quelconque des revendications 13 à 15 caractérisée en ce que le composé titane est TiCl₄.

17. Composition de pré-catalyseur selon l'une quelconque des revendications 13 à 16, caractérisée en ce qu'elle a été préparée :
a) en faisant réagir un adduct de MgCl₂ et d'un alcool en C₁-C₄ avec le composé du titane,
b) en faisant réagir le produit de l'étape a) avec un ester d'acide phtalique, dont le groupe alcoxy a au minimum 10 atomes de carbone, à la suite de quoi une transestérification se produit entre l'alcool en C₁-C₄ et l'ester d'acide phtalique,
c) en lavant le produit, et
d) en faisant réagir le produit de l'étape c) avec le composé du titane.

18. Composition de pré-catalyseur selon l'une quelconque des revendications 13 à 17, caractérisée en ce que l'ester d'acide phtalique est le phtalate de di-isodécyle ou le phtalate de ditridécyle.
